# EUROPEAN PATENT APPLICATION

(11) **EP 4 811 207 A1**
(43) Date of publication of application: **23.09.2026**
(21) Application number: 25204179.3
(22) Date of filing: 24.09.2025
(51) Int. Cl.: G06F 40/284, G06F 40/30, G06N 3/096

(54) **METHOD AND SYSTEM FOR DOMAIN-SPECIFIC TEXT PROCESSING WITH KEYWORD KNOWLEDGE DISTILLATION**

(30) Priority: 20.03.2025 IN 202521025314
(71) Applicant: Tata Consultancy Services Limited, Mumbai, Maharashtra 400 021 (IN)
(72) Inventor: BISWAS, Momojit, 700135 Kolkata, West Bengal (IN); ANISH, Preethu Rose, 411028 Pune, Maharashtra (IN); SINGHAL, Anmol, 110001 New Delhi, Delhi (IN)
(74) Representative: Goddar, Heinz J.

(57) **Abstract**

While knowledge distillation has shown promise in general NLP contexts, its application to domain-specific text remains largely underexplored. Existing models often struggle to generalize complex domain-specific vocabulary, specialized terminology, and unique sentence structures, resulting in degraded performance when applied to domain-specific tasks. Thus, embodiments of present disclosure provide a method and system for domain-specific text processing with keyword knowledge distillation. The disclosed method overcomes the challenges in conventional methods by utilizing a dynamic, weighted ensemble approach for keyword extraction, which adaptively selects domain-specific keywords extracted using multiple keyword extraction techniques. The method then applies knowledge distillation, where a student model is trained to predict the masked domain-specific keywords using context from surrounding tokens. By computing three loss functions, including distillation loss, keyword masking loss, and cosine embedding loss, the student model is optimized for performance while retaining critical domain knowledge.

## Description

### CROSS-REFERENCE TO RELATED APPLICATIONS AND PRIORITY

The present application claims priority from Indian application no. 202521025314, filed on March 20, 2025.

### TECHNICAL FIELD

The present invention generally relates to the field of knowledge distillation, and, more particularly, to a method and system for domain-specific text processing with keyword knowledge distillation.

### BACKGROUND

Over the past few years, Pre-trained Language Models (PLMs) have demonstrated exceptional performance across Natural Language Processing (NLP) benchmarks. For instance, General Language Understanding Evaluation (GLUE), Stanford Question Answering Dataset (SQuAD), and ReAding Comprehension dataset from Examinations (RACE), have achieved near-human levels of proficiency. Despite their success in general NLP tasks, PLMs often underperform in specialized domains such as Legal, Finance, Medicine etc. The low performance is mainly attributed to the unique characteristics of these domains, which differ significantly from general language. These differences include specialized vocabulary, intricate morphology, complex syntax, and domain-specific semantics. These characteristics pose a significant challenge for PLMs, as they are trained on natural language corpora that may not adequately capture the intricacies of domain-specific text. Additionally, deploying PLMs in real-world applications presents significant challenges, primarily due to their size and resource demands. These models usually have a vast number of parameters, leading to high memory requirements and compute-intensive operations. This poses a major obstacle to practical deployment. Furthermore, the large size of PLMs results in long inference times, reducing their suitability for many real world applications. Therefore, it is critical to address the challenges of domain adaptation as well as the computational overhead of the conventional PLMs.

Several techniques, such as quantization, weights pruning, and Knowledge Distillation (KD), have been developed for tackling these challenges. Prior work has shown that KD tends to achieve a better balance between compression and accuracy than other model compression techniques. DistilBERT is one of the state of the art technique which employs KD to reduce size of Bidirectional Encoder Representations from Transformers (BERT) PLM. However, it randomly masks certain keywords which makes this technique not suitable for domain-specific text processing. Another prior art (*Golchin et. al. Do not Mask Randomly: Effective Domain-adaptive Pre-training by Masking In-domain Keywords*) discloses a strategy for fine-tuning PLMs by masking domain-specific keywords. The keywords are selected based on a keyword masking threshold i.e., the keywords appearing number of times greater than the keyword masking threshold only are selected. This strategy risks overlooking important but infrequent terms, potentially undermining the model's domain understanding. Also, some training documents may contain more keywords (resulting in a higher masking ratio), while others may have fewer (leading to a lower masking ratio). As a result, the number of masked tokens varies unpredictably, causing the masking ratio to fluctuate inconsistently with each input. This inconsistency has a high probability of hindering the model's ability to generalize effectively across the data. Further, the keyword masking threshold is identified manually which makes it challenging to scale to new datasets. The prior art pre-trains the PLM 3 times using different keyword masking thresholds, making the process resource-intensive and less efficient.

### SUMMARY

Embodiments of the present disclosure present technological improvements as solutions to one or more of the above-mentioned technical problems recognized by the inventors in conventional systems. For example, in one embodiment, a method for domain-specific text processing with keyword knowledge distillation is provided. The method includes receiving a plurality of training documents and extracting a plurality of sets of keywords from the plurality of training documents using a plurality of keyword extraction techniques. Each keyword extraction technique extracts a respective set of keywords from among the plurality of sets of keywords. Further, the method includes selecting a set of domain-specific keywords in the plurality of training documents, from among the plurality of sets of keywords, using a keyword selection technique and masking the set of domain-specific keywords in the plurality of training documents to obtain a masked set of domain-specific keywords. The method further includes predicting the masked set of domain-specific keywords as a first set of logits by a student model and a second set of logits by a teacher model based on a context provided by a plurality of tokens surrounding the masked set of domain-specific keywords in the plurality of training documents. Furthermore, the method includes determining a plurality of losses based on the first set of logits and the second set of logits and updating one or more parameters of the student model based on the plurality of losses to train the student model for domain-specific text processing.

In another aspect, a system for domain-specific text processing with keyword knowledge distillation is provided. The system includes: a memory storing instructions; one or more communication interfaces; and one or more hardware processors coupled to the memory via the one or more communication interfaces, wherein the one or more hardware processors are configured by the instructions to receive a plurality of training documents and extract a plurality of sets of keywords from the plurality of training documents using a plurality of keyword extraction techniques. Each keyword extraction technique extracts a respective set of keywords from among the plurality of sets of keyword. Further, the one or more hardware processors are configured by the instructions to select a set of domain-specific keywords in the plurality of training documents, from among the plurality of sets of keywords, using a keyword selection technique and masking the set of domain-specific keywords in the plurality of training documents to obtain a masked set of domain-specific keywords. The one or more hardware processors are further configured to predict the masked set of domain-specific keywords as a first set of logits by a student model and a second set of logits by a teacher model based on a context provided by a plurality of tokens surrounding the masked set of domain-specific keywords in the plurality of training documents. Furthermore, the one or more hardware processors are configured by the instructions to determine a plurality of losses based on the first set of logits and the second set of logits and update one or more parameters of the student model based on the plurality of losses to train the student model for domain-specific text processing.

In yet another aspect, there are provided one or more non-transitory machine-readable information storage mediums comprising one or more instructions which when executed by one or more hardware processors cause a method for domain-specific text processing with keyword knowledge distillation. The method includes receiving a plurality of training documents and extracting a plurality of sets of keywords from the plurality of training documents using a plurality of keyword extraction techniques. Each keyword extraction technique extracts a respective set of keywords from among the plurality of sets of keywords. Further, the method includes selecting a set of domain-specific keywords in the plurality of training documents, from among the plurality of sets of keywords, using a keyword selection technique and masking the set of domain-specific keywords in the plurality of training documents to obtain a masked set of domain-specific keywords. The method further includes predicting the masked set of domain-specific keywords as a first set of logits by a student model and a second set of logits by a teacher model based on a context provided by a plurality of tokens surrounding the masked set of domain-specific keywords in the plurality of training documents. Furthermore, the method includes determining a plurality of losses based on the first set of logits and the second set of logits and updating one or more parameters of the student model based on the plurality of losses to train the student model for domain-specific text processing.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for domain-specific text processing with keyword knowledge distillation, according to some embodiments of the present disclosure.
FIGS. 2A and 2B, is a flow diagram illustrating a method for domain-specific text processing with keyword knowledge distillation, using the system of FIG. 1, according to some embodiments of the present disclosure.
FIG. 3 is an alternate representation of the method illustrated in FIGS. 2A and 2B, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

While knowledge distillation (KD) has shown promise in general NLP contexts, its application to domain-specific text remains largely underexplored. Existing models often struggle to generalize complex domain-specific vocabulary, specialized terminology, and unique sentence structures, resulting in degraded performance when applied to domain-specific tasks. The challenge lies in the ability to understand and accurately process context-specific keywords that are crucial for many domain-specific applications, such as legal, medical, or technical fields. Thus, embodiments of present disclosure provide a method and system for domain-specific text processing with keyword knowledge distillation. The disclosed method overcomes the challenges in conventional methods by utilizing a dynamic, weighted ensemble approach for keyword extraction, which adaptively selects domain-specific keywords extracted using multiple keyword extraction techniques. Unlike traditional keyword masking techniques, which rely on static heuristics, human annotations, or pre-defined databases, this approach does not make assumptions about keyword relevance. Instead, it dynamically adapts to the context of the text, ensuring that the most relevant and context-sensitive keywords are selected for each document. This dynamic weighting ensures that each keyword extraction method contributes appropriately to the final selection of keywords. The method then applies knowledge distillation, where a student model is trained to predict the masked domain-specific keywords using context from surrounding tokens. By computing three loss functions, including distillation loss, keyword masking loss, and cosine embedding loss, the student model is optimized for performance while retaining critical domain knowledge. Experimental results indicate that the disclosed method enables the student model to be 40% smaller and 60% faster than the teacher model for domain-specific text processing, providing an efficient solution without sacrificing accuracy or domain expertise.

### GLOSSARY

Knowledge Distillation (KD): In the case of Pre-trained Language Models (PLMs), KD involves transferring the knowledge from a complex, pre-trained teacher model to a smaller, more lightweight student model. This process allows the student model to achieve a performance at par with the teacher model while being more computationally efficient. Let *f_{T}* and *f_{S}* represent the teacher and student models, respectively. These models transform inputs into informative representations called logits. The training objective is formulated such that the student model learns to mimic the teacher model by producing similar output logits. If the student model can replicate the teacher model's logits, it should ideally perform comparably to the teacher model on downstream tasks. Mathematically, KD can be represented by the minimization of the objective function as shown in Equation 1, where L(.) is a loss function that measures the disparity between the logits of the teacher and student models during the training process, *x* represents the text input, and *X* refers to the training dataset. During training, the teacher model is kept frozen, and the student model attempts to minimize the objective loss. This process allows the model to distill the knowledge of the teacher model. ${L}_{KD} = {\sum }_{x ∈ X} L \left({f}_{S}\left(x\right),{f}_{T}\left(x\right)\right)$

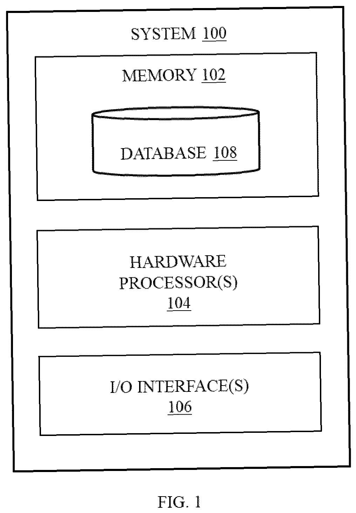

Referring now to the drawings, and more particularly to FIGS. 1 to 3, where similar reference characters denote corresponding features consistently throughout the figures, there are shown preferred embodiments, and these embodiments are described in the context of the following exemplary system and/or method.

FIG. 1 illustrates an exemplary block diagram of a system for domain-specific text processing with keyword knowledge distillation, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

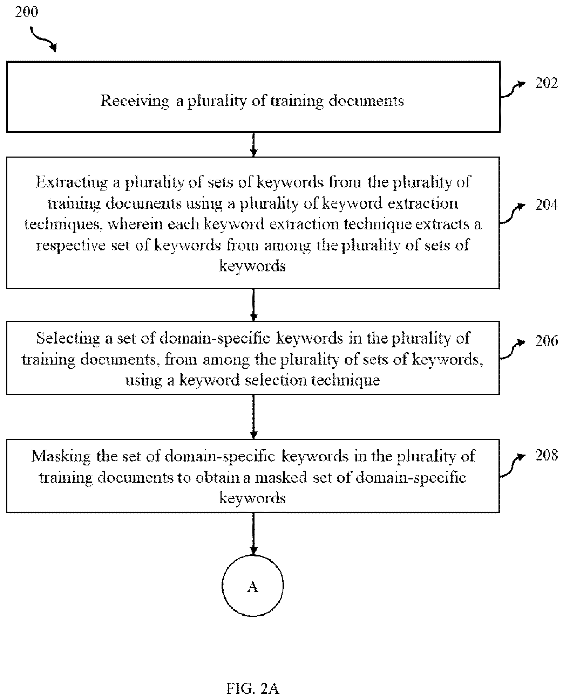

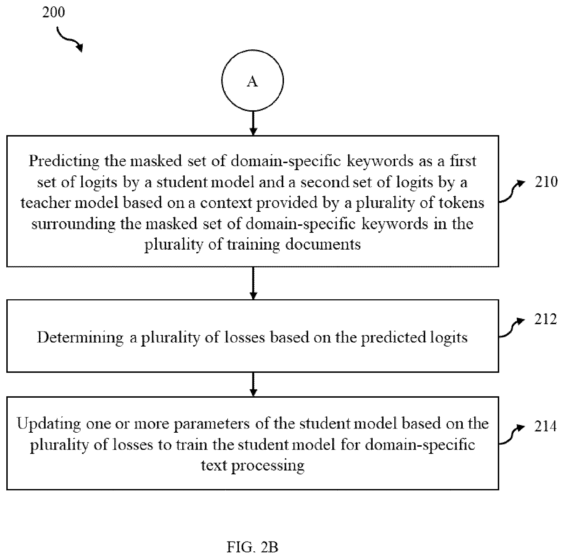

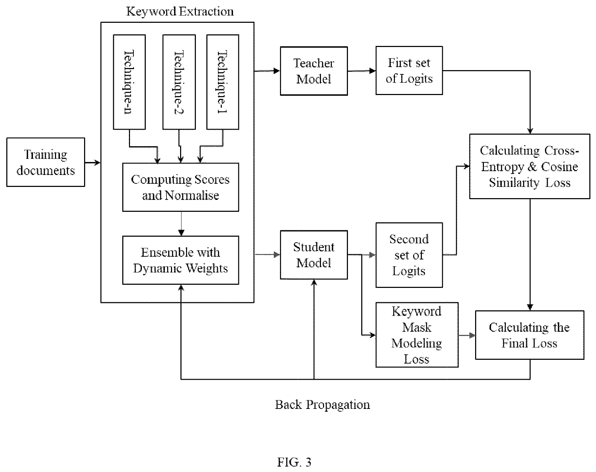

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Further, the database 108 may store the training documents, student and teacher model. Functions of the components of system 100 are explained in conjunction with flow diagram of FIGS. 2A and 2B, and FIG. 3, for domain-specific text processing with keyword knowledge distillation.

In an embodiment, the system 100 comprises one or more data storage devices or the memory 102 operatively coupled to the processor(s) 104 and is configured to store instructions for execution of steps of a method 200 depicted in FIG. 2A and FIG. 2B by the processor(s) or one or more hardware processors 104. The steps of the method of the present disclosure will now be explained with reference to the components or blocks of the system 100 as depicted in FIG. 1, the flow diagram of FIG. 2A and FIG. 2B, and the block diagram illustrated in FIG. 3 for domain-specific text processing with keyword knowledge distillation. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

FIG. 2A and FIG. 2B is a flow diagram illustrating the method 200 for domain-specific text processing with keyword knowledge distillation, according to some embodiments of the present disclosure. The method 200 is explained in conjunction with block diagram of FIG. 3 which is an alternate representation of FIG. 2A and FIG. 2B. At step 202 of the method 200, the one or more hardware processors 104 are configured to receive a plurality of training documents. The plurality of training documents are related to a particular domain such as legal, finance, medical and the like. For example, the plurality of training documents comprise legal and administrative texts, medical reports etc. Further, at step 204 of the method 200, the one or more hardware processors 104 are configured to extract a plurality of sets of keywords from the plurality of training documents using a plurality of keyword extraction techniques. Each keyword extraction technique extracts a respective set of keywords from among the plurality of sets of keywords. For example, the keyword extraction techniques are KeyBERT (Keyword extraction using Bidirectional Encoder Representations from Transformers (BERT)), Term Frequency-Inverse Document Frequency (TF-IDF), and Bidirectional Encoder Representations from Transformers - Named Entity Recognition (BERT-NER). Any other state-of-the-art keyword extraction technique may be used at step 204 for extracting a set of keywords. The method 200 is explained using KeyBERT, TF-IDF and BERT-NER as example keyword extraction techniques. Suppose *K_{KB}, K_{TF-IDF},* and *K_{NER}* are the plurality of sets of keywords extracted by KeyBERT, TF-IDF and BERT-NER techniques, respectively. KeyBERT extracts keywords based on semantic similarity between the keywords and the surrounding context, TF-IDF identifies important words based on their frequency relative to a larger corpus, and BERT-NER detects specific entities like names, organizations etc. using pre-trained BERT models.

Once the plurality of sets of keywords are extracted, at step 206 of the method 200, the one or more hardware processors 104 are configured to select a set of domain-specific keywords in the plurality of training documents, from among the plurality of sets of keywords, using a keyword selection technique. The keyword selection technique comprises firstly determining a confidence score for each keyword in the plurality of sets of keywords extracted using a respective keyword extraction technique. The confidence score for a keyword extracted using KeyBERT technique (i.e., keywords in the set *K_{KB}*) is computed by evaluating how well the keyword fits in the context, using cosine similarity between the keyword's embedding and the context embeddings. The higher the cosine similarity between the keyword's vector and the context vector, the higher the confidence score, as it indicates strong relevance. For the keywords extracted using TF-IDF technique (*K_{TF-IDF}*), the confidence score is based on the TF-IDF value of the keyword. The TF represents how often the keyword appears in the document, while the IDF (Inverse Document Frequency) adjusts for the commonness of the keyword across all documents in the corpus. The confidence score for keywords extracted using BERT-NER is calculated based on the probability assigned by the BERT-NER model for recognizing a token as an entity. The higher the probability that the token is classified as a specific entity (e.g., person, organization, date), the higher the confidence score.

Next, the confidence score for each keyword is normalized in a predefined range (for example, [0-1]) according to equation 2, where *kᵢ* represents the keyword, *c_{techniquej}*(*wᵢ*) is the confidence score of the keyword extracted using keyword extraction technique *techniqueⱼ,* among the plurality of keyword extraction techniques, *min*(*c_{techniquej}*) and *max*(*c_{techniquej}*) are minimum and maximum confidence scores of keywords extracted using the *techniqueⱼ.* ${c}_{{technique}_{j}}^{norm} \left({k}_{i}\right) = \frac{\left({c}_{{technique}_{j}}\left({w}_{i}\right)-min\left({c}_{{technique}_{j}}\right)\right)}{max \left({c}_{{technique}_{j}}\right) - min \left({c}_{{technique}_{j}}\right)}$

Once the confidence score of each keyword is normalized, a weighted ensemble score for each keyword is computed by aggregating the normalized confidence scores using dynamic weights according to equation 3. Finally, a plurality of keywords having the weighted ensemble score greater than a predefined threshold are selected as the final set of domain-specific keywords. For example, top x% of keywords, where x ∈ [10, 20], having highest weighted ensemble score are selected. Unlike static and manual approaches in conventional methods, the keyword selection technique adapts to the context of each document and ensures that only the most relevant keywords are selected. $\begin{matrix}EnsembleScore \left({k}_{i}\right) = {w}_{1} \times {c}_{{technique}_{1}}^{norm} \left({k}_{i}\right) + {w}_{2} \times {c}_{{technique}_{2}}^{norm} \left({k}_{i}\right) + ⋯ + {w}_{j} \times \\ {c}_{{technique}_{j}}^{norm} \left({k}_{i}\right)\end{matrix}$

Once the final set of domain-specific keywords is selected, at step 208 of the method 200, the one or more hardware processors 104 are configured to mask the set of domain-specific keywords in the plurality of training documents to obtain a masked text. In an embodiment, masking involves replacing the domain-specific keywords in the plurality of training documents by a mask tag <MASK>. For example, consider following legal text: "The lease agreement includes a covenant of quiet enjoyment, ensuring that the tenant has the right to use the property without disturbance from the landlord or third parties." Here, the set of domain specific keywords selected at step 206 are ['lease', 'agreement', 'covenant', 'tenant', 'property', 'landlord']. Hence, the masked text obtained at step 208 is: "The <MASK> <MASK> includes a <MASK> of quiet enjoyment, ensuring that the <MASK> has the right to use the <MASK> without disturbance from the <MASK> or third parties."

Once the masked text is obtained, at step 210, the one or more hardware processors 104 are configured to predict the set of domain-specific keywords in the masked text as a first set of logits by a student model and a second set of logits by a teacher model based on a context provided by a plurality of tokens surrounding the set of domain-specific keywords in the masked text. The teacher model is a larger and more deeper neural network. The student model, on the other hand, is a smaller and more efficient model, because it has fewer parameters as compared to the teacher model, and it is a less deeper network as compare to the teacher. The masked text is given as input to both the models. BERT tokenizes the input text, adds special tokens ([CLS] for classification and generates embeddings for each token. The input embeddings pass through BERT's multi-layer bidirectional Transformer, capturing context-dependent representations. The final hidden state corresponding to the [CLS] token (from the last Transformer layer) is used to summarize the entire sequence. This [CLS] token representation obtained from the student model is referred to as the first set of logits and the [CLS] token representation obtained from the teacher model is referred to as the second set of logits. In general, the student and teacher models processes the input sequence (i.e., the masked text) through its layers (e.g., RNN, LSTM, or other deep learning architectures). For each token in the sequence, both the teacher and student models generate output based on the design of their respective output layers to obtain the first set of logits and the second set of logits. In an embodiment, the first set of logits and the second set of logits are normalized using a SoftMax function with temperature T as given by equation 4, where *zᵢ* indicates i^{th} logit in the first set of logits and the second set of logits. The temperature parameter T is a positive floating-point number (real number). It controls the sharpness or smoothness of the resulting probability distribution. A higher temperature results in a smoother probability distribution, while a lower temperature leads to a sharper distribution. *T =* 1 corresponds to the standard SoftMax function, where the logits are directly converted to probabilities without any scaling. *T* > 1 makes the distribution smoother, where the differences between the logits are less emphasized, and probabilities are more evenly distributed. *T* < 1 makes the distribution sharper, where the logits' differences are amplified, and the highest logits dominate the probabilities. Temperature is not limited to integer values; it can be any positive real number. Therefore, values such as 0.5, 1.5, 2.0, or any other positive floating-point number can be used as the temperature. The temperature parameter is used to fine-tune the output probabilities and adjust the model's certainty or confidence in its predictions. ${p}_{i} = \frac{exp \left({z}_{i}/T\right)}{{\sum }_{j} exp \left({z}_{j}/T\right)}$

Once the first set of logits and the second set of logits are predicted, at step 212 of the method 200, the one or more hardware processors 104 are configured to determine a plurality of losses based on the first set of logits *sᵢ* and the second set of logits *tᵢ*. The plurality of losses comprise: i) a distillation loss, ii) a keyword masking loss, and iii) a cosine embedding loss. The distillation loss *L_{KD}* is determined using cross-entropy between the first set of logits and the second set of logits as given by equation 5. The keyword masking loss of the student model is determined by equation 6, where *K* denotes the set of domain-specific keywords, *xᵢ* is an i-th keyword in the masked text, and *p*(*xᵢ*|*θ*) is a predicted probability of *xᵢ* given the student model parameters *θ*. The cosine embedding loss calculated according to equation 7, where *cos*(*tᵢ, sᵢ*) is a cosine similarity between the first set of logits *sᵢ* and the second set of logits *tᵢ*. The final training loss for the student model is a linear combination of the plurality of losses as given by equation 8, where *λ*₁ and *λ*₂ control relative importance of the cosine embedding loss and the keyword masking loss. ${L}_{KD} = - {\sum }_{i} {t}_{i} log \left({s}_{i}\right)$ ${L}_{kmlm} = - {\sum }_{i ∈ K} log p \left(\left.{x}_{i}\right|θ\right)$ ${L}_{cos} = 1 - cos \left({t}_{i}, {s}_{i}\right)$ ${L}_{f} \left(θ\right) = {L}_{KD} + {λ}_{1} {L}_{cos} + {λ}_{2} {L}_{kmlm}$

Once the plurality of losses are determined, at step 214 of the method 200, the one or more hardware processors 104 are configured to update a plurality of parameters *θ* of the student model based on the plurality of losses to train the student model for domain-specific text processing. Gradients of the total loss determined by equation 8 are computed and back propagated through the student model. The Adam optimizer is used to update the student model's weights by applying the gradients to minimize the total loss and improve performance in domain-specific tasks. Adam adapts the learning rate based on the gradients and helps to converge more efficiently. Other optimizers such as Stochastic Gradient Descent (SGD), Root Mean Square Propagation (RMSprop) may be used instead of Adam in other embodiments.

After step 214, the dynamic weights used in keyword selection technique are updated. The dynamic weights ensures that the contribution of each keyword extraction method such as KeyBERT, TF-IDF, and BERT-NER is appropriately adapted to the context of the domain-specific text, thereby optimizing the overall keyword selection. Initially an equal weightage may be given for each keyword extraction technique. For example, if 3 techniques - KeyBERT, TF-IDF, and BERT-NER are used, an initial weight of 1/3 is assigned to each of these techniques. For each batch of training documents, the contribution of each keyword extraction method (KeyBERT, TF-IDF, and BERT-NER) to the final selection of keywords is calculated by counting the number of final keywords contributed by each technique to the final set of keywords. The weights *w_{KB}, w_{TF-IDF}, w_{NER}* are updated dynamically based on the contribution of each method according to equation 9. To smooth the weight updates across batches, an Exponential Moving Average (EMA) is applied to the raw weight values. This prevents drastic fluctuations and helps maintain stability. The EMA is computed according to equation 10, where *α* is the smoothing factor, and ${w}_{{method}_{previous}}^{EMA}$ is the EMA of the previous batch. To ensure that the weights are proportionally distributed, they are normalized using the SoftMax function as given by equation 11. This ensures that the sum of the weights is equal to 1, making them interpretable as probabilities. $\begin{matrix}{w}_{{technique}_{j}} = \\ \frac{count of final keywords from method}{total count of keywords in the final set of keywords}\end{matrix}$ ${w}_{{technique}_{j}}^{EMA} = α ⋅ {w}_{method} + \left(1-α\right) ⋅ {w}_{{technique}_{{j}_{previous}}}^{EMA}$ ${w}_{{technique}_{j}}^{norm} = exp \left({w}_{{technique}_{j}}^{EMA}\right) / \left(exp\left({w}_{KB}^{EMA}\right)+exp\left({w}_{TF - IDF}^{EMA}\right)+exp\left({w}_{NER}^{EMA}\right)\right)$

### EXPERIMENTAL DETAILS

Experiments were conducted on two domains: legal and finance. The variants of BERT model are used as teacher and student model, and the student model is trained using Pile of Law dataset and Reuters corpus only for experimental purposes. Any suitable model can be used and can be trained on similar datasets to achieve the desired results.

A. Teacher Model Architecture: For the legal domain, a pre-trained Legal-BERT [Chalkidis et.al. "Legal-bert: The muppets straight out of law school, " arXiv preprint arXiv:2010.02559, 2020*]* model was used as the teacher model. Legal-BERT was originally trained from scratch on a 12GB English legal corpus and follows the BERT-BASE architecture with 12 layers, 768 hidden units, 12 attention heads, and a total of 110M parameters. In the financial domain, a pretrained Fin-BERT model *[*Araci, "Finbert: Financial sentiment analysis with pre-trained language models, " arXiv preprint arXiv:1908.10063, 2019*]* as the Teacher model for implementing method 200 (alternatively referred to as Keyword Knowledge Distillation (KKD)). This model is a BERT-BASE variant pre-trained on the TRC2financial corpus.

B. Student Architecture: The student model architecture is same as the respective teacher model, except for the number of encoder layers. Using pre-trained weights for initialization, the 110M parameters in the teacher model were reduced to 66M in the student model, which has 6 layers, 768 hidden units, and 12 attention heads.

C. Dataset Description: For training in the legal domain, the Pile of Law dataset [*https:*//*huggingface.co*/*datasets*/*pile-of-law*/*pile-of-law*] was used. The Pile of law dataset is a 256GB collection of legal and administrative texts from 35 sources, including court opinions, contracts, and regulations. For the financial domain, the Reuters corpus (*https:*//*trec.nist.gov*/*data*/*reuters*/*reuters.html*) was used. From both the datasets, 1.2 million samples were selected and 80-20 split was applied for training and validation.

D. Hyperparameters used for training: The hyperparameters considered for training the student model using method 200 are: batch size of 32, a learning rate of le-5, and a maximum sequence length of 512. The training was carried out over 10 epochs. All experiments were performed on an NVIDIA TESLA V100 GPU with 32 GiB of memory.

E. Inference Time: The student model obtained by implementing method 200 in legal domain is referred to as Legal-KKD-Student and in finance domain is referred to as Fin-KKD-Student. Inference times for both the teacher and student model are reported. In the legal domain, inference time was measured using EUR-LEX's (https://huggingface.co/datasets/coastalcph/lex_glue) validation set, while for the financial models, it was measured with the Financial PhraseBank's (https://github.com/vrunm/Text-Classification-Financial-Phrase-Bank) validation set. Results for both domains are shown in Table 1. All experiments were conducted on an Intel Xeon CPU with 2 vCPUs and 13GB of RAM, with a batch size of 1. The student model was approximately 60% faster than the teacher model, primarily due to the difference in model size.

**Table 1**

| **Model** | **Inference Time (ms)** |
|---|---|
| Legal-BERT | 2303.8 |
| Legal-KKD-Student | 1364.7 |
| Fin-BERT | 2297.1 |
| Fin-KKD-Student | 1361.4 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving (202), via one or more hardware processors, a plurality of training documents;
extracting (204), via the one or more hardware processors, a plurality of sets of keywords from the plurality of training documents using a plurality of keyword extraction techniques, wherein each keyword extraction technique extracts a respective set of keywords from among the plurality of sets of keywords;
selecting (206), via the one or more hardware processors, a set of domain-specific keywords in the plurality of training documents, from among the plurality of sets of keywords, using a keyword selection technique;
masking (208), via the one or more hardware processors, the set of domain-specific keywords in the plurality of training documents to obtain a masked text;
predicting (210), via the one or more hardware processors, the set of domain-specific keywords in the masked text as a first set of logits by a student model and a second set of logits by a teacher model based on a context provided by a plurality of tokens surrounding the set of domain-specific keywords in the masked text;
determining (212), via the one or more hardware processors, a plurality of losses based on the first set of logits and the second set of logits; and
updating (214), via the one or more hardware processors, a plurality of parameters of the student model based on the plurality of losses to train the student model for domain-specific text processing.

2. The method as claimed in claim 1, wherein the keyword selection technique comprises:
determining a confidence score for each keyword in the plurality of sets of keywords extracted using a respective keyword extraction technique;
normalizing the confidence score for each keyword in a predefined range as: ${c}_{{technique}_{j}}^{norm} \left({k}_{i}\right) = \frac{\left({c}_{{technique}_{j}}\left({w}_{i}\right)-min\left({c}_{{technique}_{j}}\right)\right)}{max \left({c}_{{technique}_{j}}\right) - min \left({c}_{{technique}_{j}}\right)}$, wherein *kᵢ* represents the keyword, *c_{techniquej}*(*wᵢ*) is the confidence score of the keyword extracted using keyword extraction technique *techniqueⱼ* among the plurality of keyword extraction techniques, min (*c_{techniquej}*) and max (*c_{techniquej}*) are minimum and maximum confidence scores of keywords extracted using the *techniqueⱼ*
computing a weighted ensemble score for each keyword by aggregating the normalized confidence scores using dynamic weights as: $EnsembleScore \left({k}_{i}\right) = {w}_{1} \times {c}_{{technique}_{1}}^{norm} \left({k}_{i}\right) + {w}_{2} \times {c}_{{technique}_{2}}^{norm} \left({k}_{i}\right) + ⋯ + {w}_{j} \times {c}_{{technique}_{j}}^{norm} \left({k}_{i}\right)$ ; and
selecting a plurality of keywords having the weighted ensemble score greater than a predefined threshold as the final set of domain-specific keywords.

3. The method as claimed in claim 1, wherein the plurality of losses comprise: i) a distillation loss determined using cross-entropy between the first set of logits and the second set of logits, ii) a keyword masking loss of the student model determined as *Lₖₘₗₘ* = - Σ*_{i∈K} log p*(*xᵢ*|*θ*), where *K* denotes the set of domain-specific keywords, *xᵢ* is an i-th keyword in the masked text, and *p*(*xᵢ*|*θ*) is a predicted probability of *xᵢ* given the plurality of parameters of the student model *θ*, and iii) a cosine embedding loss calculated as *L_{cos} =* 1 - *cos*(*tᵢ*, *sᵢ*)*,* where *cos*(*tᵢ*, *sᵢ*) is a cosine similarity between the first set of logits and the second set of logits.

4. A system (100), comprising:
a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:
receive a plurality of training documents;
extract a plurality of sets of keywords from the plurality of training documents using a plurality of keyword extraction techniques, wherein each keyword extraction technique extracts a respective set of keywords from among the plurality of sets of keywords;
select a set of domain-specific keywords in the plurality of training documents, from among the plurality of sets of keywords, using a keyword selection technique;
mask the set of domain-specific keywords in the plurality of training documents to obtain a masked text;
predict the set of domain-specific keywords in the masked text as a first set of logits by a student model and a second set of logits by a teacher model based on a context provided by a plurality of tokens surrounding the set of domain-specific keywords in the masked text;
determine a plurality of losses based on the first set of logits and the second set of logits; and
update a plurality of parameters of the student model based on the plurality of losses to train the student model for domain-specific text processing.

5. The system as claimed in claim 4, wherein the keyword selection technique comprises:
determining a confidence score for each keyword in the plurality of sets of keywords extracted using a respective keyword extraction technique;
normalizing the confidence score for each keyword in a predefined range as: ${c}_{{technique}_{j}}^{norm} \left({k}_{i}\right) = \frac{\left({c}_{{technique}_{j}}\left({w}_{i}\right)-min\left({c}_{{technique}_{j}}\right)\right)}{max \left({c}_{{technique}_{j}}\right) - min \left({c}_{{technique}_{j}}\right)}$, wherein *kᵢ* represents the keyword, *c_{techniquej}*(*wᵢ*) is the confidence score of the keyword extracted using keyword extraction technique *techniqueⱼ* among the plurality of keyword extraction techniques, min (*c_{techniquej}*) and *max*(*c_{techniquej}*) are minimum and maximum confidence scores of keywords extracted using the *techniqueⱼ*
computing a weighted ensemble score for each keyword by aggregating the normalized confidence scores using dynamic weights as: $EnsembleScore \left({k}_{i}\right) = {w}_{1} \times {c}_{{technique}_{1}}^{norm} \left({k}_{i}\right) + {w}_{2} \times {c}_{{technique}_{2}}^{norm} \left({k}_{i}\right) + ⋯ + {w}_{j} \times {c}_{{technique}_{j}}^{norm} \left({k}_{i}\right)$ ; and
selecting a plurality of keywords having the weighted ensemble score greater than a predefined threshold as the final set of domain-specific keywords.

6. The system as claimed in claim 4, wherein the plurality of losses comprise: i) a distillation loss determined using cross-entropy between the first set of logits and the second set of logits, ii) a keyword masking loss of the student model determined as *Lₖₘₗₘ* = - Σ*_{i∈K} log p*(*xᵢ*|*θ*), where *K* denotes the set of domain-specific keywords, *xᵢ* is an i-th keyword in the masked text, and *p*(*xᵢ*|*θ*) is a predicted probability of *xᵢ* given the plurality of parameters of the student model *θ*, and iii) a cosine embedding loss calculated as *L_{cos} =* 1 - *cos*(*tᵢ*, *sᵢ*)*,* where *cos*(*tᵢ*, *sᵢ*) is a cosine similarity between the first set of logits and the second set of logits.

7. One or more non-transitory machine-readable information storage mediums comprising one or more instructions which when executed by one or more hardware processors cause:
receiving a plurality of training documents;
extracting a plurality of sets of keywords from the plurality of training documents using a plurality of keyword extraction techniques, wherein each keyword extraction technique extracts a respective set of keywords from among the plurality of sets of keywords;
selecting a set of domain-specific keywords in the plurality of training documents, from among the plurality of sets of keywords, using a keyword selection technique;
masking the set of domain-specific keywords in the plurality of training documents to obtain a masked text;
predicting the set of domain-specific keywords in the masked text as a first set of logits by a student model and a second set of logits by a teacher model based on a context provided by a plurality of tokens surrounding the set of domain-specific keywords in the masked text;
determining a plurality of losses based on the first set of logits and the second set of logits; and
updating a plurality of parameters of the student model based on the plurality of losses to train the student model for domain-specific text processing.

8. The one or more non-transitory machine readable information storage mediums as claimed in claim 7, wherein the keyword selection technique comprises:
determining a confidence score for each keyword in the plurality of sets of keywords extracted using a respective keyword extraction technique;
normalizing the confidence score for each keyword in a predefined range as: ${c}_{{technique}_{j}}^{norm} \left({k}_{i}\right) = \frac{\left({c}_{{technique}_{j}}\left({w}_{i}\right)-min\left({c}_{{technique}_{j}}\right)\right)}{max \left({c}_{{technique}_{j}}\right) - min \left({c}_{{technique}_{j}}\right)}$, wherein *kᵢ* represents the keyword, *c_{techniquej}*(*wᵢ*) is the confidence score of the keyword extracted using keyword extraction technique *techniqueⱼ* among the plurality of keyword extraction techniques, min (*c_{techniquej}*) and max (*c_{techniquej}*) are minimum and maximum confidence scores of keywords extracted using the *techniqueⱼ*
computing a weighted ensemble score for each keyword by aggregating the normalized confidence scores using dynamic weights as: $EnsembleScore \left({k}_{i}\right) = {w}_{1} \times {c}_{{technique}_{1}}^{norm} \left({k}_{i}\right) + {w}_{2} \times {c}_{{technique}_{2}}^{norm} \left({k}_{i}\right) + ⋯ + {w}_{j} \times {c}_{{technique}_{j}}^{norm} \left({k}_{i}\right)$ ; and
selecting a plurality of keywords having the weighted ensemble score greater than a predefined threshold as the final set of domain-specific keywords.

9. The one or more non-transitory machine readable information storage mediums as claimed in claim 7, wherein the plurality of losses comprise: i) a distillation loss determined using cross-entropy between the first set of logits and the second set of logits, ii) a keyword masking loss of the student model determined as *Lₖₘₗₘ* = - Σ*_{i∈K} log p*(*xᵢ*|*θ*), where *K* denotes the set of domain-specific keywords, *xᵢ* is an i-th keyword in the masked text, and *p*(*xᵢ*|*θ*) is a predicted probability of *xᵢ* given the plurality of parameters of the student model *θ*, and iii) a cosine embedding loss calculated as *L_{cos} = 1 - cos*(*tᵢ*, *sᵢ*)*,* where *cos*(*tᵢ*, *sᵢ*) is a cosine similarity between the first set of logits and the second set of logits.
